# EUROPEAN PATENT SPECIFICATION

(11) **EP 2 527 081 B1**
(45) Date of publication and mention of the grant of the patent: **11.01.2017**
(21) Application number: 12169431.9
(22) Date of filing: 25.05.2012
(51) Int. Cl.: B27C 9/04, B23Q 1/66, B23Q 39/02, B23Q 39/04, B23Q 1/01

(54) **Machining center and machining method**
Bearbeitungszentrum und Bearbeitungsverfahren
Centre d'usinage et procédé d'usinage

(30) Priority: 27.05.2011 IT FI20110110
(43) Date of publication of application: 28.11.2012
(73) Proprietor: PAOLINO BACCI S.R.L., 56021 Cascina (PI) (IT)
(72) Inventor: Ruggieri, Alberto, 56025 Pontedera (PI) (IT)
(74) Representative: Mannucci, Michele

(56) References cited:
- EP-A1- 0 606 052
- EP-A1- 1 250 976
- EP-A1- 1 992 449
- WO-A1-2004/080649
- WO-A1-2010/124307
- US-A- 5 700 117

## Description

### TECHNICAL FIELD

The present invention relates to improvements to numerically controlled machine tools or machining centers, in particular but not exclusively for machining wooden workpieces, such as components for producing furnishing items, such as chairs and the like according to the preamble of claim 1.

### State of the art

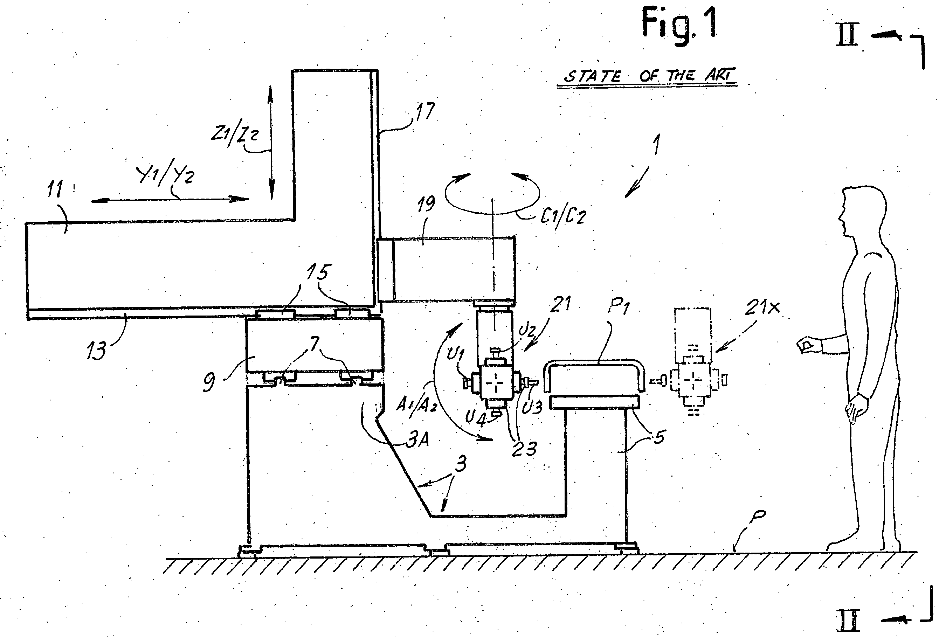

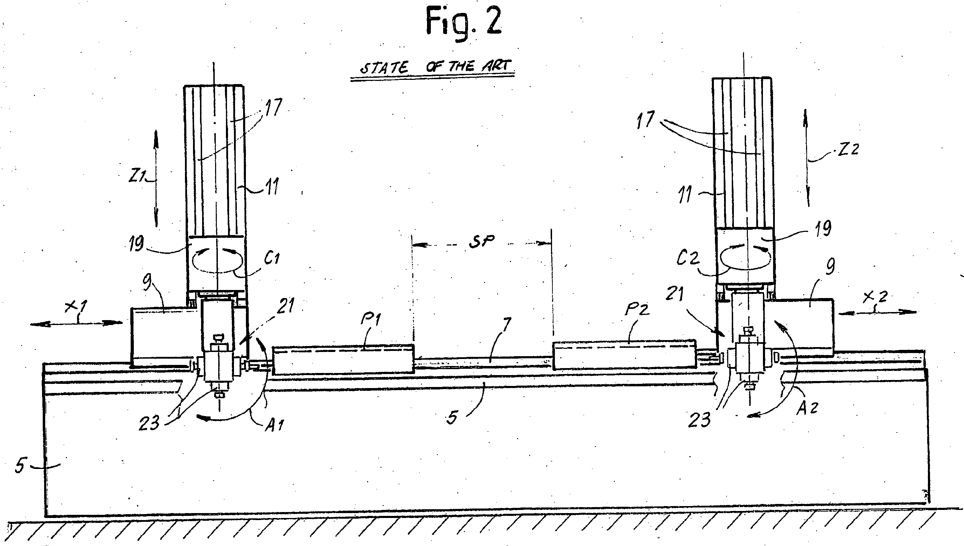

In the field of wood machining, numerically controlled machines or machining centers, equipped with a plurality of numerically controlled axes, are used for the execution of various machining operations on workpieces carried by a workpiece-supporting table. Figs.1 and 2 show a numerically controlled machine tool or machining center of known type. The machining center, indicated as a whole with 1, comprises a structure 3 fixed to a floor P. The structure 3 comprises a workpiece-supporting table 5 on which workpieces P1 to be machined are fixed.

The structure 3 forms a base 3A with guides 7 along which two carriages 9 slide, each one carrying a respective slide 11. Each slide 11 is equipped with guides 13, engaged in blocks 15 carried by the carriage 9. Moreover, the slide 11 comprises further guides 17, long which a second slide 19 moves, which carries a machining tool head 21. In the example illustrated the head 21 is a crosshead with four electrospindles 23 equipped with tools U1, U2, U3, U4.

Each tool head 21 is provided with five numerically controlled axes and more specifically with a first rotation axis A1, A2, with a second rotation axis C1, C2, orthogonal to one another, and with three translation axes, also orthogonal to one another, and more specifically:
- axes X1, X2 (Fig.2), parallel to the guides 7 integral to the base 3A,
- axes Y1, Y2 (Fig.1) parallel to the guides 13 integral to the slide 11
- vertical axes Z1, Z2 (Fig.2), parallel to the guides 17 carried by the slide 11.

In this way, each tool head 21 can move, independently from the other and under the control of a management program residing in an electronic control unit, in a combined and continuous manner with translation movements along the respective numerically controlled translation axes X1, Y1, Z1 for one of the two heads and X2, Y2, Z2 for the other of the two heads, and with rotation movements about the rotation axes A1, C1 for one head and A2, C2 for the other.

As can be observed in particular in Fig.1 the movement along the horizontal direction parallel to the guides 13 is performed completely by the head. To machine the face of the workpiece P1 opposite the base 3A, the head 21 must translate until assuming the position 21X indicated with dashed lines in Fig.1. In this completely extracted position, the head 21 is at a considerable distance with respect to the constraint represented by the blocks 15 on the carriage 9, in which the two guides 13 engage. To limit the bending deformations and vibrations that are generated when the head is in the position 21X it is necessary for the slide 11 to be produced with particular rigidity. This affects the total costs of the machine.

Moreover, as can be observed in particular in Fig.2, if two workpieces P1, P2 are being machined and both the heads 21 with which the machine is equipped must be used to machine each workpiece P1, P2, in this known embodiment it is necessary to leave a sufficiently large dead space SP between the two workpieces P1, P2 to enable insertion of the heads 21 between the two workpieces P1,, P2.

EP-A-1132171 describes a machining center comprising a base on which two uprights are slidingly arranged, each carrying a tool head equipped with a movement according to two numerically controlled rotation axes and according to two numerically controlled translation axes. The tool heads machine workpieces carried by two workpiece-supporting tables equipped with a numerically controlled movement according to a third translation axis orthogonal to the two numerically controlled axes of the head. With respect to the machining center illustrated in Figs.1 and 2, in the case of EP-A-1132171, therefore, the head has a smaller number of numerically controlled movements, as one of the numerically controlled movements is assigned to the workpiece-supporting tables. This reduces the number of faces machinable by the tools carried on the head, unless this latter has dimensions such as to project considerably with respect to the upright that supports it, an arrangement that causes the onset of important bending deformations, which in order to be reduced require a particularly rigid and therefore costly structure of the slide that supports the tool head.

WO-A-2004/080649 describes a gantry machining center, wherein a machining tool head is equipped with translation movements along a first numerically controlled horizontal axis and along a second numerically controlled vertical axis, orthogonal to one another. The workpieces to be machined are carried by a table movable along a base, according to a third numerically controlled horizontal axis, orthogonal to the translation axes of the head.

EP-A-1992449 describes a machining center according to the preamble of claim 1 with a base with an upright which carries two machining heads. Each machining head is movable along three numerically controlled translation axes, orthogonal to one another. The workpieces are carried by tables movable between a loading position and a machining position, according to a horizontal translation axis, parallel to one of the translation axes of the heads. Translation of the workpiece-supporting tables can be numerically controlled. Machining of the workpieces takes place by maintaining the table at a standstill in the machining position and moving the machining head along the three numerically controlled translation axes and about numerically controlled rotation axes.

### Summary of the invention

Some embodiments of the invention are aimed at providing a machining center which limits, completely or in part, one or more of the problems of known machining centers.

According to the invention, there is provided a machining center comprising the features of claim 1.

The programmable electronic control unit is programmed to perform the coordinated movement between the head and the workpiece-supporting table during a chip removal machining operation step, so that the feed motion of said tool with respect to the workpiece during the chip removal machining operation is divided between the operating head and the workpiece.

In this way numerous advantages are obtained, in the first place that of reducing deformation and vibration of the head, or to enable a lighter and less rigid construction of the head, in consideration of the less strict stiffness requirements.

The at least one translation axis of the head and said translation axis of the workpiece-supporting table are parallel with one another.

Preferably, the head is movable along more than one numerically controlled axis, for example along two numerically controlled translation axes, or along three numerically controlled translation axes, and preferably in combination along one or more numerically controlled translation axes and one or more numerically controlled rotation axes. In some embodiments the head is carried by a structure movable along a second numerically controlled translation axis of the head. Preferably, the movement along this second numerically controlled axis is guided along guides integral to a base fixed to the floor, said guides being substantially horizontal. Fixing to the floor of the guides, along which the head translates, enables greater stiffness to be obtained, for example with respect to a gantry structure, where the head translates along the crosspiece of the gantry.

In some embodiments the structure movable along the second translation axis of the head supports a slide on which the head is mounted, said slide being movable along a third numerically controlled translation axis of the head, for example a vertical axis.

Although in the simplest configuration the machining center is equipped with only one tool head, according to preferred embodiments of the invention, the machining center comprises two tool heads, each equipped with its own movements along respective numerically controlled axes. Preferably, the machining center also comprises two workpiece-supporting tables, each movable along a respective numerically controlled translation axis.

The invention also relates to a method for machining of a workpiece carried by a workpiece-supporting table in a machining center acording to claim 1.

Further advantageous features and embodiments of the method and of the machining center according to the invention are described hereunder with reference to an embodiment, and defined the appended claims, which form an integral part of the present description.

### Brief description of the drawings

The invention will be better understood by following the description and accompanying drawing, which shows a non-limiting practical embodiment of the invention. More in particular, in the drawing:
Figs.1 and 2, already described, show a machining center of known type, respectively in a side view and in a front view according to II-II of Fig. 1;
Figs.3, 4 and 5 show respective schematic side views of a machining center in an embodiment of the invention in three different positions of one of the tool heads;
Fig. 6 shows a front view according to VI-VI of Fig. 3;
Fig.7 shows a plan view according to VII-VII of Fig.6; and
Figs.8, 9(A) and 9(B) schematically show a machining step performed by the machining center according to the invention.

### Detailed description of an embodiment of the invention

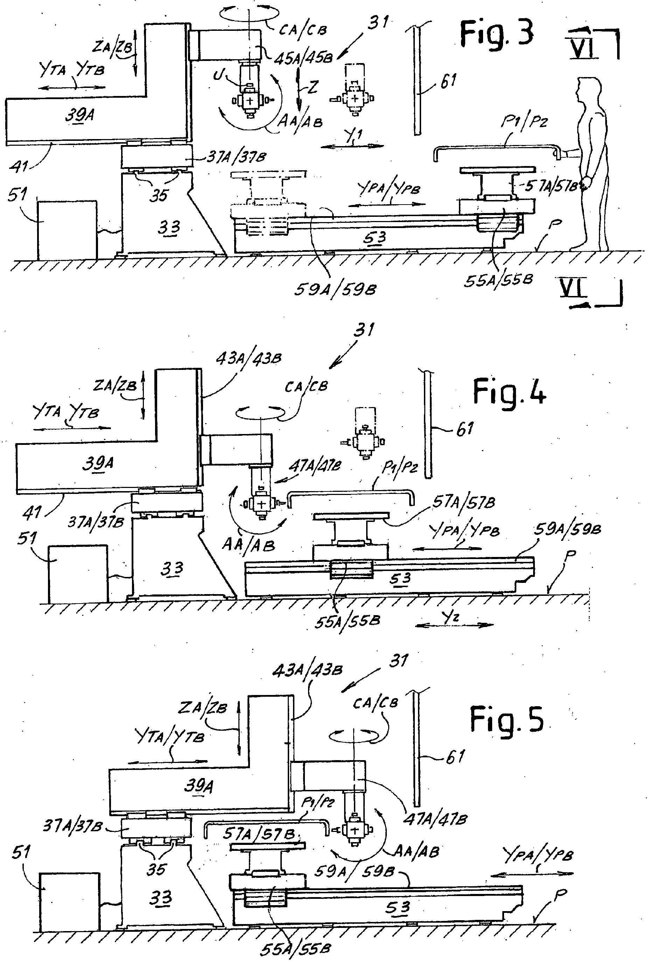

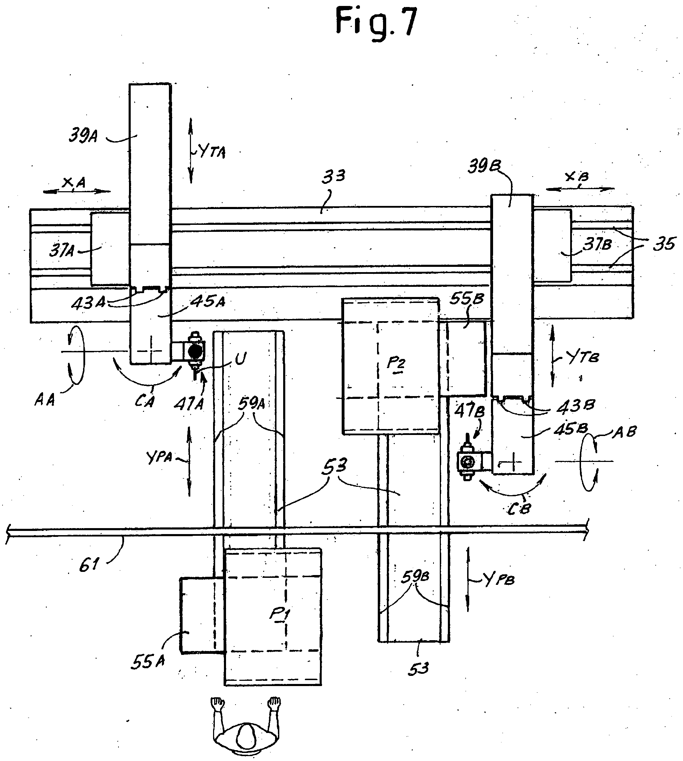

With reference to Figs.3 to 7, in the embodiment illustrated the machining center, indicated as a whole with 31, comprises a base 33 fixed to a floor P. The base 33 comprises a pair of guides 35, which develop according to a horizontal direction indicated with x in the figure. Two carriages 37A and 37B can translate along the guides 35. Each carriage 37A, 37B is equipped with a numerically controlled translation movement according to a first numerically controlled translation axis indicated with XA for the carriage 37A and with XB for the carriage 37B. Each carriage 37A, 37B can translate in the direction x by means of the respective numerically controlled axis XA, XB.

Each carriage 37A, 37B carries a first slide 39A, 39B. Each slide 39A, 39B has respective guides 41, which engage in blocks of the respective carriage 37A, 37B to move according to a second horizontal direction indicated with y1. Each slide 39A, 39B is controlled in its movement according to y1 by means of a second numerically controlled translation axis indicated with YTA, YTB for the two slides 39A and 39B respectively. In the example illustrated the directions x and y1 are orthogonal with one another and therefore so are the guides 35 and 41.

Moreover, each slide 39A, 39B carries vertical guides 43A, 43B along which a respective second slide indicated with 45A and 45B, respectively, slides. Each slide 45A, 45B moves in the vertical direction indicated with z under the control of a respective numerically controlled axis indicated with ZA for the slide 45A and with ZB for the slide 45B.

Each slide 45A, 45B carries a respective machining tool head indicated with 47A for the slide 45A and with 47B for the slide 45B. The tools of each tool head 47A, 47B are indicated with U. In the example illustrated each tool head 47A, 47B is provided with a rotation movement according to a first numerically controlled rotation axis indicated with AA for the head 47A and with AB for the head 47B. Each head is preferably also provided with a second rotation movement about a second numerically controlled rotation axis indicated with CA for the head 47A and with CB for the head 47B. In the example illustrated, the rotation axes are orthogonal to one another, i.e. oriented at 90°. However, this is only one possible embodiment. The reciprocal inclination of the two rotation axes can differ from that illustrated, and purely by way of example can be 45°.

Moreover, in the example illustrated each head 47A, 47B is equipped with four electrospindles for four distinct tools. However, it must be understood that the number of electrospindles can differ from that represented, for example only one electrospindle can be provided. Preferably, in this case a tool change system can be provided. The tool change can also be used for heads with more than one spindle, although this may be superfluous in some cases, thanks to the greater number of spindles available.

The number and the arrangement of the numerically controlled axes of each head can also differ from the example shown. It would also be possible to have different numbers and arrangements of axes for the two heads.

In Figs.3, 4 and 5 a programmable electronic control unit is schematically indicated with 51, for managing the movements along the numerically controlled axes described above of each head 47A, 47B. The control unit can receive an executable program, for controlling and managing the machining cycle. The program can be provided directly in the unit 51 or can be loaded in a memory of this unit by means of a storage medium, on-line via intranet, internet or in any other suitable manner.

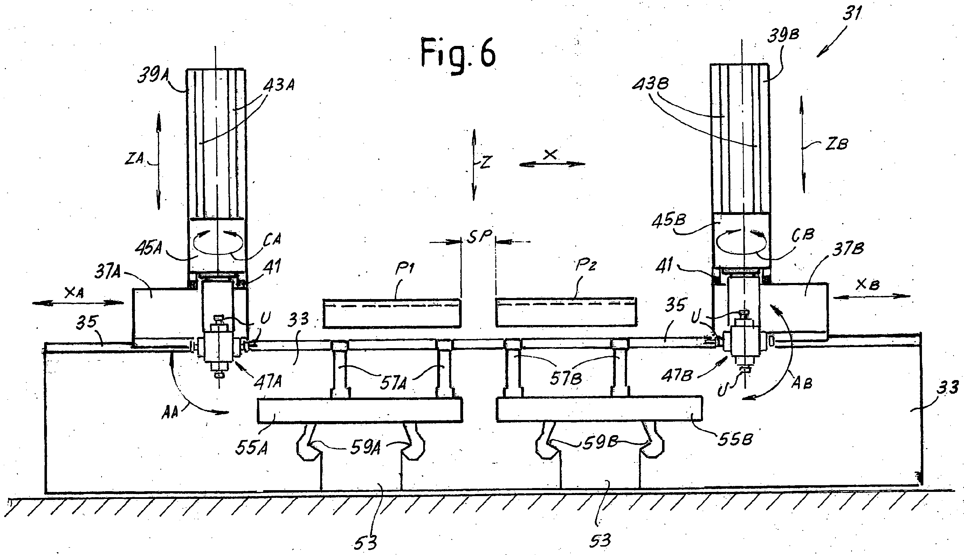

In the example illustrated the machining center 31 comprises, moreover, a structure 53 for supporting workpiece-supporting tables. The structure 53 can be designed in various manners. It can be connected directly to the base 33, or can be separate therefrom. Moreover, the structure 53 can be common for all the workpiece-supporting tables or separate parts of structure can be provided for each workpiece-supporting table. In the example illustrated the structure 53 comprises two separate bases as shown in Fig.6, for the support and movement of a pair of workpiece-supporting tables. The bases of the structure 53 are in this case separate from the base 33, although it would also be possible to join them to said base.

In the example illustrated two workpiece-supporting tables indicated with 55A and 55B, respectively, are provided. Preferably, the number of workpiece-supporting tables is the same as the number of tool heads, as in the example illustrated, but this is not strictly necessary. For example, a single workpiece-supporting table could be provided in combination with two tool heads, or vice versa. It would also be possible to provide more than two tool heads and/or more than two workpiece-supporting tables. In general, whatever the number of heads and of tables, each of these is preferably provided with the numerically controlled axes described herein for each of the two heads 47A, 47B and for each of the workpiece-supporting tables 55A, 55B.

Each workpiece-supporting table 55A, 55B can be provided with means 57A, 57B of known type for locking workpieces P1, P2 to be machined.

On the structure 53 there are provided guides 59A, 59B for the independent movement of each workpiece-supporting table 55A, 55B along a direction y2, for example oriented horizontally. The movement of each table 55A, 55B in the direction y2 is controlled independently from the movement of the other table by means of a respective numerically controlled translation axis indicated with YPA and YPB for the tables 55A and 55B, respectively. The movement along the numerically controlled axes YPA and YPB can also be continuous movements controlled by the programmable electronic control unit 51, similar to the numerically controlled movements described previously and assigned to each head 47A, 47B.

In the example illustrated the axes YPA and YPB are parallel to the axes YTA and YTB. This configuration is particularly effective and simplifies management of the numerically controlled axes. However, at least some of the advantages of the present invention are also achieved with a different arrangement of the numerically controlled axes of the workpiece-supporting tables. For example, the guides 59A and 59B could be rectilinear, but inclined with respect to the direction of the movement imparted by the numerically controlled axes YEA, YTB of the machining heads. Also in this case, the workpiece-supporting tables would still be provided with a movement with a component parallel to the direction YTA, YTB. In other embodiments the guides 59A, 59B can be curvilinear rather than rectilinear, for example with an arc of circumference lying on a substantially horizontal plane. In this case, the workpiece-supporting tables would continue to move according to a direction of motion with a component parallel to the axes YTA, YTB, this component being variable along the path that can be travelled by the tables, due to the curvature of the guides. The advantage still remains of assigning part of the relative movement according to the direction YTA, YTB to the machining tool heads and part to the workpiece-supporting tables.

Returning to the embodiment illustrated in the drawings, in brief, between each head 47A, 47B and the workpiece P1, P2 to be machined, carried by the workpiece-supporting table 55A, 55B, it is possible to have continuous movements along the following numerically controlled axes:
- rotation axes AA, CA, or AB, CB assigned to the head;
- translation axes XA, YTA, ZA, or XB, YTB, ZB assigned to the head;
- translation axes YPA, YPB assigned to the workpiece-supporting table.

Continuous movement is intended, as is known in the field of machine tools and machining centers, as a movement controlled in such a manner that the moving member can assume, under the control of the management program of the machining cycle, any position along the respective movement axis.

It is understood that with the arrangement of numerically controlled axes described above a particular advantage is achieved, consisting in performing relative movements of the tool-workpiece in the direction y1, y2 of greater magnitude, approximately double or triple with respect to the total travel along the direction y1 that can be performed by one or by the other of the two heads 47A, 47B. The travel in this direction of the carriage 39A or 39B can be limited so as to considerably reduce the bending deformations and the vibrations resulting from distancing the respective head 47A, 47B from the constraint represented by the blocks of the carriage 37A, 37B which engage the guide 41 of the slide 39A or 39B. The control unit 51 coordinates the movements according to the numerically controlled axes YTA, YTB and/or YPA, YPB in an appropriate manner so as to correctly position and reciprocally move the tool that is operating and the workpiece to be machined with respect to one another.

Moreover, during a single machining cycle it is possible, for example, to machine the workpiece P2 with the head 47A or the workpiece P1 with the head 47B without the need for a large dead space ST to be available between the two workpieces, as is instead necessary in the case of the machining center of Fig.2. In fact, the two workpieces P1 and P2 can be placed next to one another in the x direction and machining, for example, of the workpiece P2 using the head 47A can be obtained simply by moving away the workpiece-supporting table 55A in the direction y2, withdrawing the workpiece P1 with respect to the area in which the head 47A must be positioned to machine the workpiece P2.

Similarly, the workpiece P2 can be withdrawn from the machining area of the head 47B, by moving the carriage 55B away along the direction y2 when the head 47B must machine the workpiece P1. All these movements can be coordinated by the central control unit 51 together with the movements along the other numerically controlled axes described above, assigned to the heads 47A, 47B.

Moreover, the movement according to the direction y1 of the two workpiece-supporting tables 55A, 55B enables the workpiece loading and unloading area to be arranged in a position distant with respect to the machining volume of the heads 47A, 47B with the possibility of providing a safety barrier 61 which separates the loading and unloading area from the machining areas, as shown in Figs.3, 4 and 5. It is thus also possible, for example, to load a workpiece on one of the tables 55A, 55B while the other is in the machining area without risks for the operator.

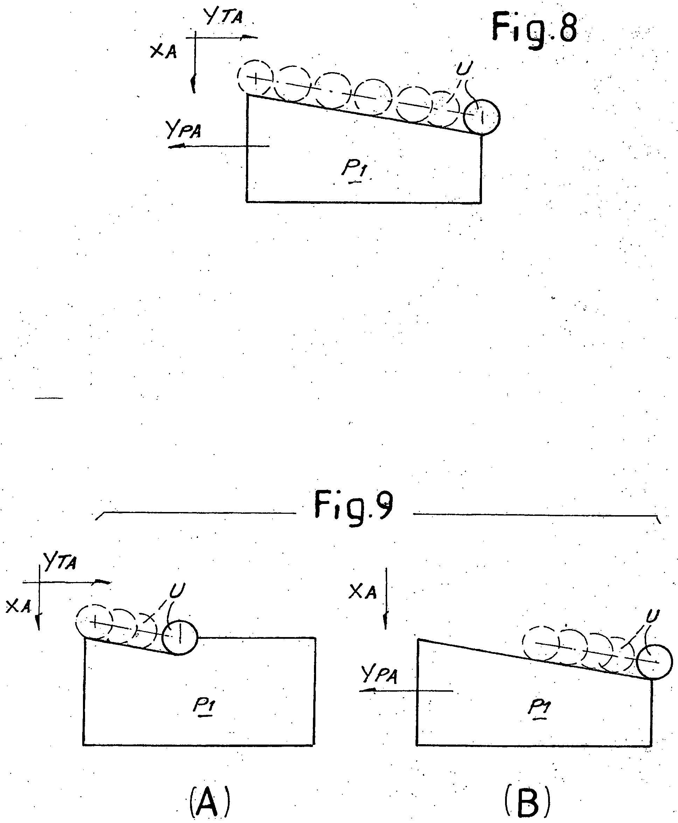

Figs.8, 9(A) and 9(B) schematically show the relative movement between tool and workpiece being machined in a step of a machining cycle, in two different operating modes. In these figures only the tool, the workpiece and the reciprocal relative forward movements are represented schematically. In Fig. 8 machining of an edge of the workpiece P1 is performed by moving the workpiece P1 by means of the workpiece-supporting table along the direction y by means of the numerically controlled axis YPA, while the tool U moves (as a result of the movement of the head that carries it) with a movement according to the numerically controlled axis XA and along the numerically controlled axis YTA. The movements along YPA and YTA are coordinated so as to obtain the component of the reciprocal forward movement in the direction y. Part of the movement is assigned to the tool U and part to the workpiece P1 to perform the whole chip removal machining operation of the edge of the workpiece P1. In this case the movements along YTA and YPA are simultaneous.

Figs. 9(A) and 9(B) schematically show the situation in which, vice versa, the movements along YTA and along YPA are shifted in time. The movement along YTA is performed first, followed by the movement along YPA, to ultimately obtain the same complete trajectory along the edge of the workpiece P1 to be machined.

In both cases, characteristically, a machining process is performed in which the relative workpiece/tool feed motion is divided between the tool and the workpiece.

It is understood that the drawing shows just one example, provided merely as a practical demonstration of the invention, which can vary in its forms and arrangements, without however departing from the scope of the concept underlying the invention as defined by the claims. Any reference numbers in the appended claims are provided to facilitate reading of the claims with reference to the description and to the drawing, and do not limit the scope of protection represented by the claims.

## Claims

1. A machining center comprising:
at least a first tool head (47A; 47B) movable according to a plurality of numerically controlled axes comprising at least one translation axis (YTA; YTB) of the head;
at least a first workpiece-supporting table (55A; 55B) movable according to at least one numerically controlled translation axis (YPA; YPB) of the workpiece-supporting table, said translation axis (YPA; YPB) of the workpiece-supporting table having at least one component of the respective movement vector parallel to said at least one translation axis (YTA; YTB) of the head;
a programmable electronic control unit (51) to control the movements of the head and of the workpiece-supporting table;
**characterized in that** said programmable electronic control unit (51) is programmed to perform the movement of said first head (47A; 47B) along said at least one translation axis (YTA; YTB) thereof and the movement of the first workpiece-supporting table (55A; 55B) along said at least one translation axis (YPA; YPB) thereof coordinated with one another for reciprocally moving a tool (U) carried by said first head (47A; 47B) and a workpiece (P1; P2) carried by said first workpiece-supporting table (55A; 55B), along the direction of said at least one translation axis (YTA; YTB) of the head, during the execution of a machining cycle, so that a relative feed motion of said tool (U) and the workpiece (P) during a chip removal operation is divided between the machining head (47A, 47B) and the workpiece.

2. Machining center according to claim 1, wherein the movement of the first workpiece-supporting table (55A; 55B) along said at least one translation axis (YPA; YPB) of the workpiece-supporting table and the movement of the first head (47A; 47B) along said at least one translation axis (YTA; YTB) of the head are both continuous and programmable movements.

3. Machining center according to claim 1 or 2, wherein said at least one translation axis (YTA; YTB) of the head and said translation axis (YPA; YPB) of the workpiece-supporting table are parallel to one another.

4. Machining center according to one or more of the previous claims, wherein said first head (47A; 47B) is carried by a structure (37A, 39A; 37B, 39B) movable along a second numerically controlled translation axis (XA; XB) of the head.

5. Machining center according to claim 4, wherein said structure (37A, 39A; 37B, 39B) is guided in the movement along said second translation axis (XA; XB) of the head on guides (35) integral to a base (3) fixed to the floor (P), said guides (35) being substantially horizontal.

6. Machining center according to claim 4 or 5, wherein said structure (37A, 39A; 37B, 39B) movable along said second translation axis (XA; XB) of the head supports a slide (45A; 45B) whereon said first head (47A; 47B) is mounted, said slide (45A; 45B) being movable along a third numerically controlled translation axis (ZA; ZB) of the head.

7. Machining center according to claim 6, wherein said third translation axis (ZA; ZB) of the head is substantially vertical.

8. Machining center according to one or more of the previous claims, wherein said first head (47A; 47B) is provided with at least one numerically controlled rotation axis (AA; AB; CA; CB).

9. Machining center according to one or more of the previous claims, wherein said first head (47A; 47B) is provided with at least two numerically controlled rotation axes (AA, CA; AB; CB), preferably orthogonal to one another.

10. Machining center according to one or more of the previous claims, comprising a second tool head (47B; 47A), and wherein said first head (47A) and said second head (47B) are preferably movable along an equal number of numerically controlled axes, independent for the two heads (47A, 47B).

11. Machining center according to claim 11, wherein each of said first head and second head (47A, 47B) is carried by a respective structure (37A, 39A, 37B, 39B), the two structures being movable on common guides (35) carried by a common base (33) extending parallel to the movement direction along a second translation axis (YTA, YTB) of each head (47A, 47B).

12. Machining center according to one or more of the previous claims, comprising a second workpiece-supporting table (55B; 55A), said first workpiece-supporting table and said second workpiece-supporting table being movable independently of one another along a respective numerically controlled translation axis (YPA; YPB), according to movement directions substantially parallel to one another.

13. Machining enter according to claim 12, wherein:
said programmable electronic control unit (51) is programmed to perform the movement of each said first head and second head (47A, 47B) along the respective at least one translation axis (YTA, YTB) of the head and the movement of each said first workpiece-supporting table and second workpiece-supporting table (55A, 55B) along the respective at least one translation axis (YPA, YPB) of the workpiece-supporting table coordinated with one another for reciprocally moving a tool (U) carried by one of said first and second head (47A, 47B) and a workpiece (P1, P2) carried by one of said first and second workpiece-supporting tables (55A, 55B), during the execution of a machining cycle, along the reciprocal direction of translation between tool and workpiece.

14. Machining center according to claim 13, wherein said first head and said second head (47A, 47B) are each carried by a respective structure (37A, 39A, 37B, 39B) and wherein said two structures are movable according to respective numerically controlled translation axes (YA, YB) along substantially horizontal guides (35) carried by a base (33) fixed to the floor.

15. Machining center according to claim 14, wherein the guides (35) carried by said base (33) are common for said first head (47A) and said second head (47B).

16. Machining center according to claim 14 or 15, wherein said first workpiece-supporting table (55A) and said second workpiece-supporting table (55B) are movable independently of one another, according to the respective numerically controlled translation axes (YPA, YPB) along respective guides (59A, 59B) substantially orthogonal to the guides (35) carried by said base (33).

17. A method for machining a workpiece (P1, P2) carried by a workpiece-supporting table (55A, 55B) by means of a tool (U) carried by at least one head (47A, 47B) in a machining center according to one or more of the previous claims, wherein the numerically controlled movement along at least one reciprocal direction of translation between said workpiece (P1, P2) and said head (47A, 47B) is divided between said head (47A, 47B) and said workpiece-supporting table (55A, 55B), so that during a chip-removal machining operation step the feed motion of said tool (U) with respect to the workpiece (P) is divided between the operating head (47A, 47B) and the workpiece (P).

18. Method according to claim 17 comprising the step of performing a chip removal machining operation on said workpiece (P1, P2) with a reciprocal feed motion between said tool (U) and said workpiece (P1, P2), said motion having at least one component along said reciprocal translation direction, moving said head (47A, 47B) and said first workpiece-supporting table (55A, 55B) in a coordinated manner, so that said reciprocal feed motion, during said chip removal machining, is divided between the head (47A, 47B) and the workpiece (P1, P2).

## Patentansprüche

1. Bearbeitungszentrum, das Folgendes umfasst:
mindestens einen Bearbeitungskopf (47A; 47B), der gemäß einer Anzahl numerisch gesteuerter Achsen, die mindestens eine Translationsachse (YTA; YTB) des Kopfes umfassen, beweglich ist;
mindestens einen Werkstück-Auflagetisch (55A; 55B), der gemäß der mindestens einen numerisch gesteuerten Translationsachse (YPA; YPB) des Werkstück-Auflagetischs beweglich ist, wobei die Translationsachse (YPA; YPB) des Werkstück-Auflagetischs mindestens eine Komponente des jeweiligen Bewegungsvektor parallel zu der mindestens einen Translationsachse (YTA; YTB) des Kopfes aufweist;
eine programmierbare elektronische Steuereinheit (51) zum Steuern der Bewegungen des Kopfes und des Werkstück-Auflagetischs;
**dadurch gekennzeichnet, dass** die programmierbare elektronische Steuereinheit (51) programmiert ist, die Bewegung des ersten Kopfes (47A; 47B) entlang der mindestens einen Translationsachse (YTA; YTB) dessen und die Bewegung des ersten Werkstück-Auflagetischs (55A; 55B) entlang der mindestens einen Translationsachse (YPA; YPB) dessen koordiniert miteinander durchzuführen, um ein Werkzeug (U), das von dem ersten Kopf (47A; 47B) getragen wird, und ein Werkstück (P1; P2), das von dem ersten Werkstück-Auflagetisch (55A; 55B) getragen wird, entlang der Richtung der mindestens einen Translationsachse (YTA; YTB) des Kopfes, während der Ausführung eines Bearbeitungszyklus, wechselseitig zu bewegen, sodass eine relative Vorschubgeschwindigkeit des Werkzeugs (U) und des Werkstücks (P) während eines Zerspanungsvorgangs zwischen dem Bearbeitungskopf (47A, 47B) und dem Werkstück geteilt wird.

2. Bearbeitungszentrum gemäß Anspruch 1, wobei die Bewegung des ersten Werkstück-Auflagetischs (55A; 55B) entlang der mindestens einen Translationsachse (YPA; YPB) des Werkstück-Auflagetisch und die Bewegung des ersten Kopfes (47A; 47B) entlang der mindestens einen Translationsachse (YTA; YTB) des Kopfes beide kontinuierliche und programmierbar Bewegungen sind.

3. Bearbeitungszentrum gemäß Anspruch 1 oder 2, wobei der mindestens einen Translationsachse (YTA; YTB) des Kopfes und der mindestens einen Translationsachse (YPA; YPB) des Werkstück-Auflagetisch parallel zueinander sind.

4. Bearbeitungszentrum gemäß einem oder mehreren der vorhergehenden Ansprüche, wobei der erste Kopf (47A; 47B) durch eine Struktur (37A, 39A; 37B, 39B), die entlang einer zweiten numerisch gesteuerten Translationsachse (XA; XB) des Kopfes beweglich ist, getragen wird.

5. Bearbeitungszentrum gemäß Anspruch 4, wobei die Struktur (37A, 39A; 37B, 39B) bei der Bewegung entlang der zweiten Translationsachse (XA; XB) des Kopfes auf Führungen (35), die mit einer an dem Boden (P) befestigten Basis (3) integral sind, geführt wird, wobei die Führungen (35) im Wesentlichen horizontal sind.

6. Bearbeitungszentrum gemäß Anspruch 4 oder 5, wobei die Struktur (37A, 39A; 37B, 39B), die entlang der zweiten Translationsachse (XA; XB) des Kopfes beweglich ist, einen Schlitten (45A; 45B) trägt, auf dem der erste Kopf (47A; 47B) montiert ist, wobei der Schlitten (45A; 45B) entlang einer dritten numerisch gesteuerten Translationsachse (ZA; ZB) des Kopfes beweglich ist.

7. Bearbeitungszentrum gemäß Anspruch 6, wobei die dritte Translationsachse (ZA; ZB) des Kopfes im Wesentlichen vertikal ist.

8. Bearbeitungszentrum gemäß einem oder mehreren der vorhergehenden Ansprüche, wobei der erste Kopf (47A; 47B) mit mindestens einer numerisch gesteuerten Drehachse (AA; AB; CA; CB) versehen ist.

9. Bearbeitungszentrum gemäß einem oder mehreren der vorhergehenden Ansprüche, wobei der erste Kopf (47A; 47B) mit mindestens zwei numerisch gesteuerten Drehachsen (AA, CA; AB; CB), bevorzugt orthogonal zueinander, versehen ist.

10. Bearbeitungszentrum gemäß einem oder mehreren der vorhergehenden Ansprüche, das einen zweiten Bearbeitungskopf (47B; 47A) umfasst und wobei der erste Kopf (47A) und der zweite Kopf (47B) bevorzugt entlang einer gleichen Anzahl numerisch gesteuerter Achsen, unabhängig für die zwei Köpfe (47A, 47B), beweglich sind.

11. Bearbeitungszentrum gemäß Anspruch 11, wobei sowohl der erste als auch der zweite Kopf (47A, 47B) durch eine jeweilige Struktur (37A, 39A, 37B, 39B) getragen werden, wobei die zwei Strukturen auf gemeinsamen Führungen (35), die von einer gemeinsamen Basis (33) getragen werden, sich parallel zu der Bewegungsrichtung entlang einer zweiten Translationsachse (YTA, YTB) jedes Kopfes (47A, 47B) erstreckend, beweglich sind.

12. Bearbeitungszentrum gemäß einem oder mehreren der vorhergehenden Ansprüche, das einen zweiten Werkstück-Auflagetisch (55B; 55A) umfasst, wobei der erste Werkstück-Auflagetisch und der zweite Werkstück-Auflagetisch unabhängig voneinander entlang einer jeweiligen numerisch gesteuerten Translationsachse (YPA; YPB), gemäß Bewegungsrichtungen, die im Wesentlichen parallel zueinander sind, beweglich sind.

13. Bearbeitungszentrum gemäß Anspruch 12, wobei:
die programmierbare elektronische Steuereinheit (51) programmiert ist, die Bewegung sowohl des ersten als auch des zweiten Kopfes (47A, 47B) entlang der jeweiligen mindestens einen Translationsachse (YTA, YTB) des Kopfes und die Bewegung sowohl des ersten Werkstück-Auflagetischs als auch des zweiten Werkstück-Auflagetischs (55A, 55B) entlang der jeweiligen mindestens einen Translationsachse (YPA, YPB) des Werkstück-Auflagetischs koordiniert miteinander zum wechselseitigen Bewegen eines Werkzeugs (U), das durch einen von dem ersten und zweiten Kopf (47A, 47B) getragen wird, und eines Werkstücks (P1, P2), das durch einen von dem ersten und zweiten Werkstück-Auflagetisch (55A, 55B) getragen wird, während der Ausführung eines Bearbeitungszyklus, entlang der wechselseitigen Translationsrichtung zwischen Werkzeug und Werkstück auszuführen.

14. Bearbeitungszentrum gemäß Anspruch 13, wobei der erste Kopf und der zweite Kopf (47A, 47B) jeweils durch eine jeweilige Struktur (37A, 39A; 37B, 39B) getragen werden und wobei die zwei Strukturen gemäß jeweiligen numerisch gesteuerten Translationsachsen (YA, YB) entlang im Wesentlichen horizontaler Führungen (35), die durch eine an dem Boden befestigte Basis (33) getragen werden, beweglich sind.

15. Bearbeitungszentrum gemäß Anspruch 14, wobei die Führungen (35), die durch die Basis (33) getragen werden, gemeinsam für den ersten Kopf (47A) und den zweiten Kopf (47B) sind.

16. Bearbeitungszentrum gemäß Anspruch 14 oder 15, wobei der erste Werkstück-Auflagetisch (55A) und der zweite Werkstück-Auflagetisch (55B) unabhängig voneinander beweglich sind, gemäß den jeweiligen numerisch gesteuerten Translationsachsen (YPA, YPB) entlang jeweiliger Führungen (59A, 59B), die im Wesentlichen orthogonal zu den Führungen (35) sind, die durch die Basis (33) getragen werden.

17. Verfahren zum Bearbeiten eines Werkstücks (P1, P2), das durch einen Werkstück-Auflagetisch (55A, 55B) getragen wird, mittels eines Werkzeugs (U), das von mindestens einem Kopf (47A, 47B) getragen wird, in einem Bearbeitungszentrum gemäß einem oder mehreren der vorhergehenden Ansprüche, wobei die numerisch gesteuerte Bewegung entlang mindestens einer wechselseitigen Translationsrichtung zwischen dem Werkstück (P1, P2) und dem Kopf (47A, 47B) zwischen dem Kopf (47A, 47B) und dem Werkstück-Auflagetisch (55A, 55B) geteilt wird, sodass während eines Schrittes eines Spanabhebungsbearbeitungsvorgangs die Vorschubbewegung des Werkzeugs (U) hinsichtlich des Werkstücks (P) zwischen dem Bearbeitungskopf (47A, 47B) und dem Werkstück (P) aufgeteilt wird.

18. Verfahren gemäß Anspruch 17, das den Schritt des Ausführens eines Spanabhebungsbearbeitungsvorgangs an dem Werkstück (P1, P2) mit einer wechselseitigen Vorschubbewegung zwischen dem Werkzeug (U) und dem Werkstück (P1, P2) umfasst, wobei die Bewegung mindestens eine Komponente entlang der wechselseitigen Translationsrichtung aufweist, wobei der Kopf (47A, 47B) und der erste Werkstück-Auflagetisch (55A, 55B) auf eine koordinierte Weise bewegt werden, sodass die wechselseitige Vorschubbewegung, während der Spanabhebungsbearbeitung, zwischen dem Kopf (47A, 47B) und dem Werkstück (P1, P2) aufgeteilt wird.

## Revendications

1. Un centre d'usinage, comprenant :
au moins une première tête d'outil (47A ; 47B) déplaçable suivant une pluralité d'axes commandés numériquement comprenant au moins un axe de translation (YTA ; YTB) de la tête ;
au moins une première table de support de pièce à usiner (55A ; 55B) déplaçable suivant au moins un axe de translation commandé numériquement (YPA ; YPB) de la table de support de pièce à usiner, ledit axe de translation (YPA ; YPB) de la table de support de pièce à usiner ayant au moins une composante du vecteur de déplacement correspondant parallèle au(x)dit(s) axe(s) de translation (YTA ; YTB) de la tête ;
une unité de commande électronique programmable (51) pour commander les mouvements de la tête et de la table de support de pièce à usiner ;
**caractérisé en ce que** ladite unité de commande électronique programmable (51) est programmée pour effectuer le mouvement de ladite première tête (47A ; 47B) le long de ladite ou desdits axe(s) de translation (YTA ; YTB) de celle-ci et le mouvement de la première table de support de pièce à usiner (55A ; 55B) le long dudit ou desdits axes de translation (YPA ; YPB) de celle-ci de manière coordonnée l'un avec l'autre pour déplacer en va-et-vient un outil (U) porté par ladite première tête (47A ; 47B) et une pièce à usiner (P1 ; P2) portée par ladite première table de support de pièce à usiner (55A ; 55B), le long de la direction dudit ou desdits axe(s) de translation (YTA ; YTB) de la tête, durant l'exécution d'un cycle d'usinage, de sorte qu'un mouvement d'alimentation relatif dudit outil (U) et de ladite pièce à usiner (P) durant une opération de retrait de copeau soit réparti entre la tête d'usinage (47A, 47B) et la pièce à usiner.

2. Centre d'usinage selon la revendication 1, dans lequel le déplacement de la première table de support de pièce à usiner (55A ; 55B) le long dudit ou desdits axes de translation (YPA ; YPB) de la table de support de pièce à usiner et le mouvement de la première tête (47A ; 47B) le long dudit ou desdits axes de translation (YTA ; YTB) de la tête sont tous les deux des mouvements continus et programmables.

3. Centre d'usinage selon la revendication 1 ou 2, dans lequel ledit ou lesdits axes de translation (YTA ; YTB) de la tête et lesdits axes de translation (YPA ; YPB) de la table de support de pièce à usiner sont parallèles entre eux.

4. Centre d'usinage selon une ou plusieurs des revendications précédentes, dans lequel ladite première tête (47A ; 47B) est portée par une structure (37A, 39A ; 37B, 39B) déplaçable le long d'un deuxième axe de translation commandé numériquement (XA ; XB) de la tête.

5. Centre d'usinage selon la revendication 4, dans lequel ladite structure (37A, 39A ; 37B, 39B) est guidée dans le déplacement le long dudit deuxième axe de translation (XA ; XB) de la tête sur des guides (35) d'un seul tenant avec une base (3) fixée sur le sol (P), lesdits guides (35) étant essentiellement horizontaux.

6. Centre d'usinage selon la revendication 4 ou 5, dans lequel ladite structure (37A, 39A ; 37B, 39B) déplaçable le long dudit deuxième axe de translation (XA ; XB) de la tête supporte un coulisseau (45A ; 45B) sur lequel ladite première tête (47A ; 47B) est montée, ledit coulisseau (45A ; 45B) étant déplaçable le long d'un troisième axe de translation commandé numériquement (ZA ; ZB) de la tête.

7. Centre d'usinage selon la revendication 6, dans lequel ledit troisième axe de translation (ZA ; ZB) de la tête est essentiellement vertical.

8. Centre d'usinage selon une ou plusieurs des revendications précédentes, dans lequel ladite première tête (47A ; 47B) est pourvue d'au moins une axe de rotation commandé numériquement (AA ; AB ; CA ; CB).

9. Centre d'usinage selon une ou plusieurs des revendications précédentes, dans lequel ladite première tête (47A ; 47B) est pourvue d'au moins deux axes de rotation commandés numériquement (AA, CA ; AB ; CB) de préférence orthogonaux l'un à l'autre.

10. Centre d'usinage selon une ou plusieurs des revendications précédentes, comprenant une seconde tête d'outil (47B : 47A) et dans lequel ladite première tête (47A) et ladite seconde tête (47B) sont de préférence déplaçables le long d'un nombre égal d'axes commandés numériquement, indépendants pour les deux têtes (47A, 47B).

11. Centre d'usinage selon la revendication 10, dans lequel chacune desdites première et seconde têtes (47A, 47B) est portée par une structure respective (37A, 39A, 37B, 39B), les deux structures étant déplaçables sur des guides communs (35) portés par une base commune (33) s'étendant parallèlement à la direction de déplacement le long d'un second axe de translation (YTA, YTB) de chaque tête (47A, 47B).

12. Centre d'usinage selon une ou plusieurs des revendications précédentes, comprenant une seconde table de support de pièce à usiner (55B, 55A), ladite première table de support de pièce à usiner et ladite seconde table de support de pièce à usiner étant déplaçables indépendamment l'une de l'autre le long d'un axe de translation respectif commandé numériquement (YPA, YPB), suivant des directions de déplacement essentiellement parallèles l'une à l'autre.

13. Centre d'usinage selon la revendication 12, dans lequel :
ladite unité de commande électronique programmable (51) est programmée pour effectuer le mouvement de chacune des première tête et seconde tête (47A, 47B) le long de leur axe de translation respectif (YTA, YTB) de la tête et le mouvement de chacune desdites première table de support de pièce à usiner et seconde table de support de pièce à usiner (55A, 55B) le long de l'axe de translation respectif (YPA, YPB) de la table de support de pièce à usiner de manière coordonnée l'une avec l'autre pour déplacer en va-et-vient un outil (U) porté par l'une desdites première et seconde têtes (47A, 47B) et une pièce à usiner (P1, P2) portée par l'une desdites première et seconde tables de support de pièce à usiner (55A, 55B), durant l'exécution d'un cycle d'usinage, le long de la direction de déplacement en va-et-vient entre l'outil et la pièce à usiner.

14. Centre d'usinage selon la revendication 13, dans lequel ladite première tête et ladite seconde tête (47A, 47B) sont chacune portées par une structure respective (37A, 39A, 37B, 39B) et dans lequel lesdites deux structures sont déplaçables suivant des axes de translation respectifs commandés numériquement (YA, YB) le long de guides substantiellement horizontaux (35) portés par une base (33) fixée sur le sol.

15. Centre d'usinage selon la revendication 14, dans lequel les guide (35) portés par ladite base (33) sont communs pour ladite première tête (47A) et ladite seconde tête (47B).

16. Centre d'usinage selon la revendication 14 ou 15, dans lequel ladite première table de support de pièce à usiner (55A) et ladite seconde table de support de pièce à usiner (55B) sont déplaçables indépendamment l'une de l'autre, suivant les axes de translation respectifs commandés numériquement (YPA, YPB) le long de guides respectifs (59A, 59B) essentiellement orthogonaux aux guides (35) portés par ladite base (33).

17. Un procédé d'usinage d'une pièce à usiner (P1, P2) portée par une table de support de pièce à usiner (55A, 55B) au moyen d'un outil (U) porté par au moins une tête (47A, 47B) dans un centre d'usinage selon une ou plusieurs des revendications précédentes, dans lequel le mouvement commandé numériquement le long d'au moins une direction de va-et-vient de translation entre ladite pièce à usiner (P1, P2) et ladite tête (47A, 47B) est réparti entre ladite tête (47A, 47B) et ladite table de support de pièce à usiner (55A, 55B), de sorte que durant une étape d'opération d'usinage de retrait de copeau, le mouvement d'alimentation dudit outil (U) par rapport à la pièce à usiner (P) est réparti entre la tête opérationnelle (47A, 47B) et la pièce à usiner (P).

18. Procédé selon la revendication 17, comprenant l'étape consistant à effectuer une opération d'usinage de retrait de copeau sur ladite pièce à usiner (P1, P2) avec un mouvement d'alimentation en va-et-vient entre ledit outil (U) et ladite pièce à usiner (P1, P2), ledit mouvement ayant au moins une composante le long de ladite direction de translation en va-et-vient, à déplacer ladite tête (47A, 47B) et ladite première table de support de pièce à usiner (55A, 55B) d'une manière coordonnée, de sorte que le mouvement d'alimentation en va-et-vient, durant ledit usinage de retrait de copeau, soit réparti entre la tête (47A, 47B) et la pièce à usiner (P1, P2).
